# EUROPÄISCHE PATENTSCHRIFT

(11) **EP 3 362 949 B1**
(45) Veröffentlichungstag und Bekanntmachung des Hinweises auf die Patenterteilung: **03.07.2024**
(21) Anmeldenummer: 16781450.8
(22) Anmeldetag: 13.10.2016
(51) Int. Cl.: G06K 19/073, G06K 19/077

(54) **BERECHTIGUNGSTOKEN, ELEKTRONISCHES IDENTIFIKATIONSDOKUMENT UND ELEKTRONISCHES BERECHTIGUNGSKONTROLLSYSTEM**
AUTHORISATION TOKEN, ELECTRONIC IDENTIFICATION DOCUMENT AND ELECTRONIC AUTHORISATION CONTROL SYSTEM
JETON D'AUTORISATION, DOCUMENT D'IDENTIFICATION ÉLECTRONIQUE ET SYSTÈME DE CONTRÔLE D'AUTORISATION ÉLECTRONIQUE

(30) Priorität: 16.10.2015 DE 102015117634
(43) Veröffentlichungstag der Anmeldung: 22.08.2018
(73) Patentinhaber: Bundesdruckerei GmbH, 10969 Berlin (DE)
(72) Erfinder: PETERS, Florian, 12103 Berlin (DE); WOLF, Andreas, 13158 Berlin-Rosenthal (DE)
(74) Vertreter: Patentship Patentanwaltsgesellschaft mbH
(86) Internationale Anmeldenummer: PCT/EP2016/074622
(87) Internationale Veröffentlichungsnummer: WO 2017/064203

(56) Entgegenhaltungen:
- DE-A1-102005 062 827
- DE-A1-102012 211 150
- US-A1- 2008 157 974
- US-A1- 2009 040 878
- US-A1- 2009 303 049

## Beschreibung

Die vorliegende Erfindung betrifft das Gebiet der elektronischen Berechtigungskontrolle, insbesondere der elektronischen Berechtigungskontrolle an Grenzübergängen.

Die Offenlegungsschrift US 2009/303049 A1 offenbart einen Daten-Tag, der eine interne Batterie umfasst.

Die Offenlegungsschrift US 2008/157974 A1 offenbart einen RFID-Chip.

Die Offenlegungsschrift DE 10 2005 062 827 A1 offenbart ein Dokument mit einem Datenspeicher.

Die Offenlegungsschrift US 2009/040878 A1 offenbart eine Einladungskarte für ein bestimmtes Ereignis.

Die Offenlegungsschrift DE 10 2012 211 150 A1 offenbart ein Identifikationsdokument. Für eine Vielzahl von Staaten oder Staatenverbänden wird ein Visum benötigt, um in den jeweiligen Staat oder Staatenverband einreisen zu können. Neben einem solchem Einreisevisum verlangen manchen Staaten auch ein Ausreisevisum oder ein Visum für Reisen innerhalb eines Staates, auch als Reisevisum oder Durchreisevisum bekannt. Ferner wird in einigen Staaten ein Aufenthaltsvisum benötigt. Ein Visum kann vor dem Antritt einer Reise beispielsweise bei einem Konsulat des betreffenden Staates beantragt werden oder bei der Einreise direkt an einer Grenzübergangsstelle, beispielsweise an einem internationalen Flughafen, erteilt werden.

Herkömmlicherweise werden die vorstehend beschriebenen Arten von Visa in Form eines Sichtvermerks in ein Identifikationsdokument, insbesondere einen Reisepass, der betreffenden Person angebracht, beispielsweise in Form eines Stempels oder eines Papierstücks, das in den Reisepass eingeklebt wird. Dies erlaubt eine visuelle Überprüfung eines Visums durch das Grenzkontrollpersonal.

Seit der Einführung von elektronischen Identifikationsdokumenten, insbesondere elektronischen Personalausweisen und elektronischen Reisepässen, werden an Grenzübergangsstellen und insbesondere an Flughäfen vermehrt automatische Grenzkontrollsysteme eingesetzt, um das Abfertigen von Reisenden zu vereinfachen, aber auch zu beschleunigen. Derartige automatische Grenzkontrollsysteme sind ausgebildet, die elektronischen Identifikationsdokumente von Reisenden automatisch auszulesen und zu überprüfen. Dabei legt der Reisende seinen elektronischen Reisepass mit der Personalisierseite auf ein Lesegerät. Das Lesegerät liest dann eine maschinenlesbare Zone aus, die den Zugriff auf weitere in dem Dokument gespeicherte Daten ermöglicht. Eine weitere Automatisierung von Grenzkontrollsystemen scheitert jedoch daran, dass die vorstehend beschriebenen herkömmlichen Visa in der Regel immer noch manuell überprüft werden müssen, da diese nicht von einem Lesegerät elektronisch ausgelesen werden können.

Es ist daher die Aufgabe der vorliegenden Erfindung, eine Alternative zu einem herkömmlichen Visum zu schaffen, die es insbesondere im Zusammenhang mit einem elektronischen Identifikationsdokument ermöglicht, eine Reiseberechtigung einer Person effizient anzuzeigen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Gemäß einem ersten Aspekt betrifft die Erfindung ein Berechtigungstoken für ein elektronisches Identifikationsdokument, wobei das Berechtigungstoken einen elektronischen Schaltkreis umfasst, welcher einen ersten Schaltkreiszustand und einen zweiten Schaltkreiszustand aufweist, wobei der elektronische Schaltkreis ausgebildet ist, in dem ersten Schaltkreiszustand eine Berechtigung der Person zur Einreise, Durchreise, Ausreise und/oder zum Aufenthalt der Person anzuzeigen, und wobei der elektronische Schaltkreis von dem ersten Schaltkreiszustand in den zweiten Schaltkreiszustand überführbar ist, um die Einreise-, Durchreise-, Ausreise- und/oder Aufenthaltsberechtigung der Person zu löschen. Das elektronische Identifikationsdokument kann insbesondere ein elektronischer Reisepass oder ein elektronischer Personalausweis sein.

Gemäß einer Ausführungsform ist der elektronische Schaltkreis von dem ersten Schaltkreiszustand in den zweiten Schaltkreiszustand irreversibel überführbar.

Der elektronische Schaltkreis kann ansprechend auf den Empfang eines elektromagnetischen Feldes von dem ersten Schaltkreiszustand in den zweiten Schaltkreiszustand überführbar sein.

Gemäß einer Ausführungsform kann der elektronische Schaltkreis einen Schaltkreisabschnitt aufweisen, welcher in dem ersten Schaltkreiszustand in einem elektrisch leitenden Zustand ist und welcher in dem zweiten Schaltkreiszustand in einem elektrisch nicht leitenden Zustand ist.

Der Schaltkreisabschnitt kann eine elektronische Schaltung, insbesondere eine elektronische Transistorschaltung, aufweisen, welche ansprechend auf den Empfang eines Steuersignals von dem elektrisch leitenden Zustand in den elektrisch nicht leitenden Zustand überführbar ist.

Gemäß einer Ausführungsform kann der Schaltkreisabschnitt einen elektrisch leitenden Leitungsabschnitt aufweisen, welcher mittels eines durch ein einfallendes elektromagnetisches Feld induzierten Stroms durchtrennbar und dadurch in den nicht leitenden Zustand überführbar ist, oder einen elektrisch leitenden Leitungsabschnitt aufweisen, welcher bei Einwirkung einer mechanischen Kraft durchtrennbar und dadurch in den nicht leitenden Zustand überführbar ist.

Das Berechtigungstoken kann eine mechanische Kontaktseite aufweisen, welche mit einer Klebeschicht versehen ist, wobei die mechanische Kontaktseite mit dem Identifikationsdokument mittels der Klebeschicht stoffschlüssig verbindbar ist, um das Berechtigungstoken mit dem Identifikationsdokument zu verbinden.

Gemäß einer Ausführungsform kann der elektronische Schaltkreis ausgebildet sein, nach einer vordefinierten Laufzeit automatisch vom ersten Schaltkreiszustand in den zweiten Schaltkreiszustand überzugehen. Dies ist beispielsweise bei einem befristeten elektronischen Visum günstig.

Das Berechtigungstoken umfasst ferner ein Display, das ausgebildet sein kann, die Restlaufzeit oder ein Ablaufdatum des Berechtigungstokens im ersten Schaltkreiszustand anzuzeigen. Hierdurch wird beispielsweise der technische Vorteil erreicht, dass die Person des Berechtigungstokens darüber informiert werden kann, bis wann ein elektronisches Visum gültig ist.

Das Display ist ausgebildet, anzuzeigen, wie der elektronische Schaltkreis manuell vom ersten Schaltkreiszustand in den zweiten Schaltkreiszustand überführbar ist.

Bei dem elektronischen Schaltkreis des Berechtigungstokens kann es sich um einen elektronisch auslesbaren RFID-Chip handeln.

Gemäß einer Ausführungsform ist der RFID-Chip ausgebildet, im Zusammenhang mit dem elektronischen Identifikationsdokument ausgelesen zu werden.

Der RFID-Chip kann vom ersten Schaltkreiszustand in den zweiten Schaltkreiszustand überführbar sein, indem eine Resonanzfrequenz oder eine Güte des RFID-Chips geändert wird.

Gemäß einem zweiten Aspekt betrifft die Erfindung ein elektronisches Identifikationsdokument mit einem Berechtigungstoken gemäß dem ersten Aspekt der Erfindung. Bei dem elektronischen Identifikationsdokument kann es sich insbesondere um einen elektronischen Reisepass oder einen elektronischen Personalausweis handeln.

Gemäß einem dritten Aspekt betrifft die Erfindung ein elektronisches Berechtigungskontrollsystem mit einem Berechtigungstoken gemäß dem ersten Aspekt der Erfindung und einem Lesegerät, das ausgebildet ist, zu überprüfen, ob sich ein elektronischer Schaltkreis des Berechtigungstokens in einem ersten Schaltkreiszustand oder in einem zweiten Schaltkreiszustand befindet.

Gemäß einer Ausführungsform kann es sich beim dem elektronischen Berechtigungskontrollsystem um ein eGate-Zugangskontrollsystem handeln.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm eines Berechtigungstokens für ein elektronisches Identifikationsdokument gemäß einer Ausführungsform;
- Fig. 2: ein schematisches Diagramm eines elektronischen Identifikationsdokuments mit einem Berechtigungstoken gemäß einer Ausführungsform; und
- Fig. 3: ein schematisches Diagramm eines elektronischen Berechtigungskontrollsystems zum Überprüfen einer Berechtigung einer Person gemäß einer Ausführungsform.

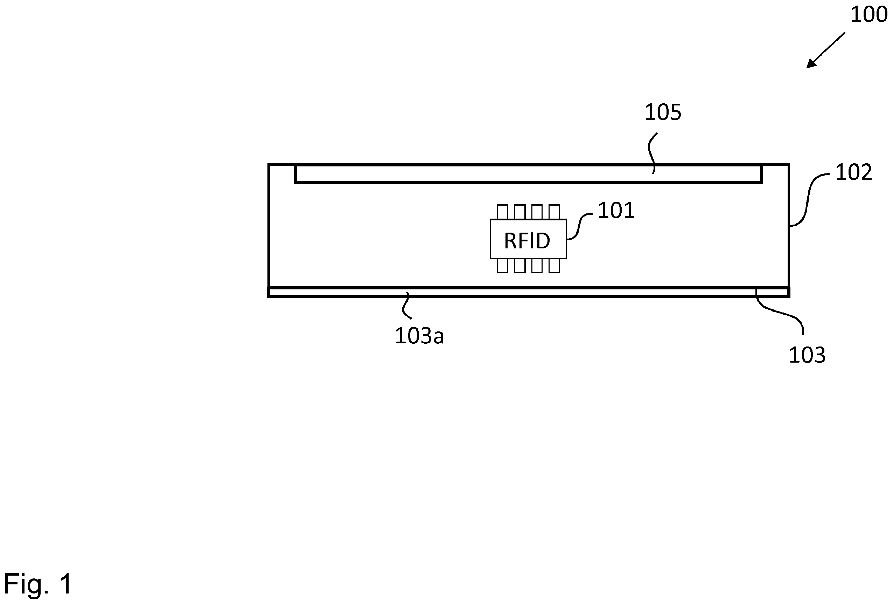

Figur 1 zeigt ein schematisches Diagramm eines elektronischen Berechtigungstokens 100 für ein elektronisches Identifikationsdokument einer Person gemäß einer Ausführungsform. Das Berechtigungstoken 100 umfasst einen elektronischen Schaltkreis 101, welcher einen ersten Schaltkreiszustand und einen zweiten Schaltkreiszustand aufweist. Gemäß einer Ausführungsform kann der elektronische Schaltkreis 101 in einem Substratkörper 102 eingebettet sein.

Der Substratkörper 102 kann ein- oder mehrlagig bzw. papier- und/oder kunststoffbasiert sein. Der Substratkörper 102 kann aus kunststoffbasierten Folien aufgebaut sein, welche mittels Verkleben und/oder Laminieren zusammengefügt werden, wobei die Folien bevorzugt ähnliche stoffliche Eigenschaften aufweisen. Gemäß einer Ausführungsform kann das Berechtigungstoken 100 bzw. der Substratkörper 102 Abmessungen aufweisen, wie diese als Klasse 2 oder 3 des Standards ISO 14443-1/2 definiert sind. Das Berechtigungstoken 100 bzw. der Substratkörper 102 können beispielsweise in Form einer Karte ausgebildet sein.

Der elektronische Schaltkreis 101 ist ausgebildet, in dem ersten Schaltkreiszustand eine Einreise-, Durchreise-, Ausreise- und/oder Aufenthaltsberechtigung der Person anzuzeigen, wobei der elektronische Schaltkreis 101 von dem ersten Schaltkreiszustand in den zweiten Schaltkreiszustand überführbar ist, um die Einreise-, Durchreise-, Ausreise- und/oder Aufenthaltsberechtigung der Person zu löschen. Gemäß einer Ausführungsform handelt es sich bei dem Berechtigungstoken 100 um ein elektronisches Visum.

Gemäß einer Ausführungsform ist der elektronische Schaltkreis 101 ansprechend auf den Empfang eines elektromagnetischen Feldes von dem ersten Schaltkreiszustand in den zweiten Schaltkreiszustand überführbar, d.h. die Berechtigung kann durch ein geeignet ausgestaltetes elektromagnetisches Feld gelöscht werden.

Zur Ausbildung des ersten Schaltkreiszustands und des zweiten Schaltkreiszustands kann der elektronische Schaltkreis 101 gemäß einer Ausführungsform einen Abschnitt aufweisen, welcher in dem ersten Schaltkreiszustand in einem elektrisch leitenden Zustand ist und in dem zweiten Schaltkreiszustand in einem elektrisch nicht leitenden Zustand ist. Hierzu kann der Schaltkreisabschnitt eine elektronische Schaltung, insbesondere eine elektronische Transistorschaltung, aufweisen, welche ansprechend auf den Empfang eines Steuersignals von dem elektrisch leitenden Zustand in den elektrisch nicht leitenden Zustand überführbar ist, d.h. die Berechtigung kann durch ein geeignet ausgestaltetes Steuersignal gelöscht werden.

Gemäß einer Ausführungsform kann der Schaltkreisabschnitt des elektronischen Schaltkreises 101 einen elektrisch leitenden Leitungsabschnitt aufweisen, welcher mittels eines durch ein einfallendes elektromagnetisches Feld induzierten Stroms durchtrennbar und dadurch in den nicht leitenden Zustand überführbar ist. Dies erlaubt es, die Berechtigung beispielswiese mittels eines Lesegeräts irreversibel zu löschen.

Alternativ oder zusätzlich kann der Schaltkreisabschnitt des elektronischen Schaltkreises 101 einen elektrisch leitenden Leitungsabschnitt aufweisen, welcher bei Einwirkung einer äußeren mechanischen Kraft durchtrennbar und dadurch in den nicht leitenden Zustand überführbar ist. Dies erlaubt es, beispielweise durch ein manuelles oder maschinelles Knicken oder Brechen eines Abschnitts des Berechtigungstokens die Berechtigung irreversibel zu löschen.

Bei der in Figur 1 dargestellten Ausführungsform umfasst das Berechtigungstoken 100 eine mechanische Kontaktseite 103, die beispielsweise durch eine Unterseite des Substratkörpers 102 ausgebildet werden kann. Dabei kann die mechanische Kontaktseite 103 mit einer Klebeschicht 103a versehen sein, mittels derer die mechanische Kontaktseite 103 mit einem elektronischen Identifikationsdokument stoffschlüssig verbindbar ist, um das Berechtigungstoken 100 mit dem elektronischen Identifikationsdokument zu verbinden. Insbesondere erlaubt es die mechanische Kontaktseite 103 mit der Klebeschicht 103a, das Berechtigungstoken 100 in einen Reisepass einzukleben.

Gemäß einer Ausführungsform ist der elektronische Schaltkreis 101 des Berechtigungstokens 100 ausgebildet, nach einer vordefinierten Laufzeit automatisch vom ersten Schaltkreiszustand in den zweiten Schaltkreiszustand überzugehen. Bei einer solchen Ausführungsform lässt sich mithin bei Ausstellung des Berechtigungstokens 100 festlegen, wie lange die Berechtigung gültig sein soll.

Bei der in Figur 1 dargestellten Ausführungsform umfasst das Berechtigungstoken 100 ferner ein Display 105, beispielsweise ein einfaches LCD-Display, und zwar vorzugsweise auf der der mechanischen Kontaktseite 103 gegenüberliegenden Seite des Substratkörpers 102 des Berechtigungstokens 100. Das Display 105 kann dazu ausgebildet sein, die Restlaufzeit oder das Ablaufdatum des Berechtigungstokens 100 im ersten Schaltkreiszustand anzuzeigen, so dass leicht überprüft werden kann, wie lange das Berechtigungstoken 100 noch gültig ist.

Das Display 105 ist ausgebildet, anzuzeigen, wie der elektronische Schaltkreis 101 manuell vom ersten Schaltkreiszustand in den zweiten Schaltkreiszustand überführbar ist.

Bei der in Figur 1 dargestellten Ausführungsform handelt es sich bei dem elektronischen Schaltkreis 101 um einen elektronisch auslesbaren RFID-Chip. Der RFID-Chip 101 kann mittels eines Lesegeräts über eine Funkverbindung kontaktlos ausgelesen werden, so dass die in dem RFID-Chip 101 gespeicherten Daten über Funkwellen einfach verfügbar gemacht werden können. Bei niedrigen Frequenzen geschieht dies induktiv über ein Nahfeld, bei höheren Frequenzen über ein elektromagnetisches Fernfeld. Für die Kommunikation mit einem Lesegerät kann der RFID-Chip 101 eine Antenne umfassen oder mit einer solchen verbunden sein. Der RFID-Chip 101 ist vorzugsweise ein passiver RFID-Chip, d.h. entnimmt die für seinen Betrieb nötige Energie dem elektromagnetischen Feld eines Lesegeräts, kann jedoch auch über eine eigene Energiequelle verfügen. Gemäß einer Ausführungsform ist der RFID-Chip 101 für eine Kommunikation mittels Near-Field-Communication (NFC), beispielsweise nach dem Standard ISO/IEC 14443 oder ISO/IEC 18092, ausgebildet.

Gemäß einer Ausführungsform kann der RFID-Chip 101 vom ersten Schaltkreiszustand in den zweiten Schaltkreiszustand überführt werden, indem eine Resonanzfrequenz oder eine Güte des RFID-Chips 101, insbesondere einer Antenne des RFID-Chips 101, geändert wird. Dabei ist der RFID-Chip 101 vorzugsweise derart ausgebildet, dass die Deaktivierung, d.h. das Löschen der Berechtigung, hochfrequenztechnisch zu einer geringen Last führt.

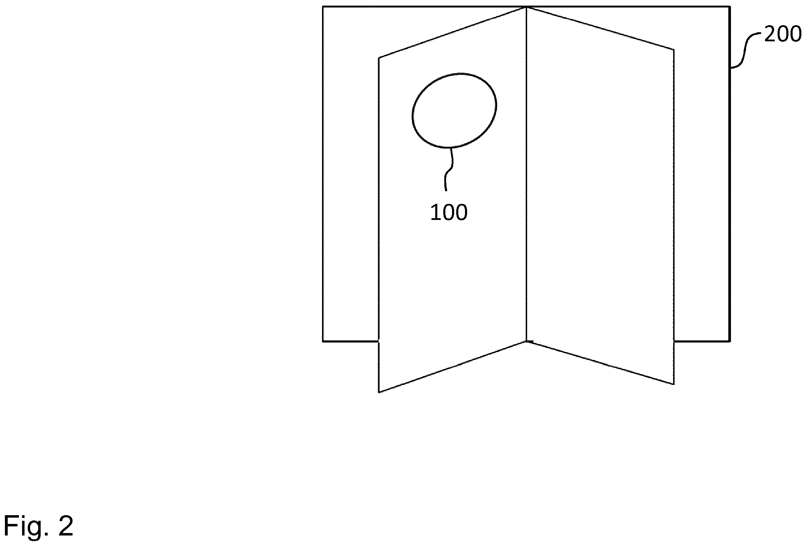

Figur 2 zeigt ein schematisches Diagramm eines elektronischen Identifikationsdokuments 200 mit dem Berechtigungstoken 100 von Figur 1 gemäß einer Ausführungsform. Gemäß einer Ausführungsform handelt es sich bei dem elektronischen Identifikationsdokument 200 um einen elektronisch auslesbaren Reisepass, der für automatisierte Grenzkontrollen einsetzbar ist. Wie in Figur 2 schematisch dargestellt, kann gemäß einer Ausführungsform das elektronische Identifikationsdokument 200 buchartig mit mehreren Seiten ausgebildet sein. Bei einer solchen Ausführungsform kann das Berechtigungstoken mittels der auf der mechanischen Kontaktseite 103 vorgesehenen Klebeschicht 103a auf eine Seite des elektronischen Identifikationsdokuments 200 geklebt werden.

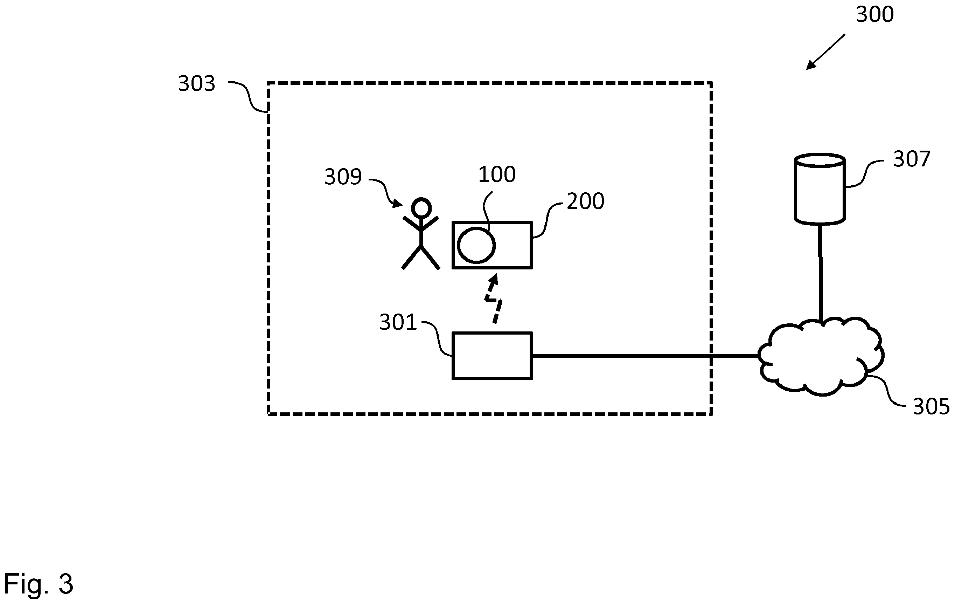

Figur 3 zeigt ein schematisches Diagramm eines elektronischen Berechtigungskontrollsystems 300 zum Überprüfen einer Berechtigung einer Person 309 gemäß einer Ausführungsform. Der Person 309 ist ein elektronisches Identifikationsdokument 200 mit einem Berechtigungstoken 100 zugeordnet.

Das elektronische Berechtigungskontrollsystem 300 umfasst ein Lesegerät 301, das dazu ausgebildet ist, innerhalb eines Kontrollbereichs 303 zu überprüfen, ob sich der RFID-Chip 101 (siehe Figur 1) des Berechtigungstokens 100 in einem ersten Schaltkreiszustand oder in einem zweiten Schaltkreiszustand befindet, d.h. ob eine Einreise-, Durchreise-, Ausreise- und/oder Aufenthaltsberechtigung besteht oder nicht. Ferner kann das Lesegerät 301 ausgebildet sein, beispielsweise im Fall einer Ausreise der Person 309, das Berechtigungstoken 100 zu deaktivieren, d.h. dem RFID-Chip 101 ein Steuersignal zu senden, das den RFID-Chip 101 vom ersten Schaltkreiszustand in den zweiten Schaltkreiszustand überführt. Wie bereits vorstehend beschrieben, kann diese Deaktivierung durch das Lesegerät 301 bewirkt werden, indem eine Resonanzfrequenz oder eine Güte des RFI D-Chips 101, insbesondere einer Antenne des RFID-Chips 101, geändert wird. Dabei ist der RFID-Chip 101 vorzugsweise derart ausgebildet, dass die Deaktivierung, d.h. das Löschen der Berechtigung, hochfrequenztechnisch zu einer geringen Last führt. Bei einer solchen Ausführungsform wird das deaktivierte Berechtigungstoken 100 das Feld des Lesegeräts 301 nicht mehr belasten und kann somit auch nicht mit einem Auslesen des elektronischen Identifikationsdokuments 200 durch das Lesegerät 301 interferieren. Gemäß einer Ausführungsform kann das Lesegerät 301 ausgebildet sein, die erfolgreiche Deaktivierung durch das Versenden eines weiteren Steuersignals zu überprüfen.

Gemäß einer Ausführungsform ist das Lesegerät 301 ferner ausgebildet, Daten zur Identifizierung der Person 309 aus dem elektronischen Identifikationsdokument 200 auszulesen. Dabei kann das Lesegerät 301 dazu ausgebildet sein, die aus dem elektronischen Identifikationsdokument 200 ausgelesenen Daten zur Identifizierung der Person 309 über ein Kommunikationsnetzwerk 305 an ein Hintergrundsystem 307, beispielsweise in Form eines Servers und/oder einer Datenbank, zu senden. In dem Hintergrundsystem 307 kann dann eine Überprüfung dieser Daten stattfinden, insbesondere ob die durch das Berechtigungstoken 100 angezeigten Berechtigungen der Person erteilt worden sind, die durch das elektronische Identifikationsdokument 200 identifiziert wird, und/oder ob der Person 309 die Berechtigungen erteilt worden sind, wie dies durch den Zustand des Berechtigungstokens 100 angezeigt wird.

Gemäß einer Ausführungsform kann es sich bei dem elektronischen Berechtigungskontrollsystem 300 um ein eGate-Berechtigungskontrollsystem oder ein easyPass-Berechtigungskontrollsystem handeln, welches beispielsweise zur Visumskontrolle an Grenzübergängen eingesetzt werden kann.

### BEZUGSZEICHENLISTE

- 100: Berechtigungstoken
- 101: Elektronischer Schaltkreis
- 102: Substratkörper
- 103: Mechanische Kontaktseite
- 103a: Klebeschicht
- 105: Display

- 200: Elektronisches Identifikationsdokument

- 300: Elektronisches Berechtigungskontrollsystem
- 301: Lesegerät
- 303: Kontrollbereich
- 305: Kommunikationsnetzwerk
- 307: Hintergrundsystem
- 309: Person

## Patentansprüche

1. Berechtigungstoken (100) für ein elektronisches Identifikationsdokument (200) einer Person, wobei das Berechtigungstoken (100) einen elektronischen Schaltkreis (101) umfasst, welcher einen ersten Schaltkreiszustand und einen zweiten Schaltkreiszustand aufweist, wobei der elektronische Schaltkreis (101) ausgebildet ist, in dem ersten Schaltkreiszustand eine Einreise-, Durchreise-, Ausreise- und/oder Aufenthaltsberechtigung der Person anzuzeigen, und wobei der elektronische Schaltkreis (101) von dem ersten Schaltkreiszustand in den zweiten Schaltkreiszustand überführbar ist, um die Einreise-, Durchreise-, Ausreise- und/oder Aufenthaltsberechtigung der Person zu löschen, wobei der elektronische Schaltkreis (101) ausgebildet ist, nach einer vordefinierten Laufzeit automatisch vom ersten Schaltkreiszustand in den zweiten Schaltkreiszustand überzugehen, **dadurch gekennzeichnet, dass** das Berechtigungstoken (100) ferner ein Display (105) umfasst, wobei das Display (105) ausgebildet ist, anzuzeigen, wie der elektronische Schaltkreis (101) manuell vom ersten Schaltkreiszustand in den zweiten Schaltkreiszustand überführbar ist.

2. Berechtigungstoken (100) nach Anspruch 1, wobei der elektronische Schaltkreis (101) von dem ersten Schaltkreiszustand in den zweiten Schaltkreiszustand irreversibel überführbar ist.

3. Berechtigungstoken (100) nach Anspruch 1 oder 2, wobei der elektronische Schaltkreis (101) ansprechend auf den Empfang eines elektromagnetischen Feldes von dem ersten Schaltkreiszustand in den zweiten Schaltkreiszustand überführbar ist.

4. Berechtigungstoken (100) nach einem der vorstehenden Ansprüche, wobei der elektronische Schaltkreis (101) einen Schaltkreisabschnitt aufweist, welcher in dem ersten Schaltkreiszustand in einem elektrisch leitenden Zustand ist und welcher in dem zweiten Schaltkreiszustand in einem elektrisch nicht leitenden Zustand ist.

5. Berechtigungstoken (100) nach Anspruch 4, wobei der Schaltkreisabschnitt eine elektronische Schaltung, insbesondere eine elektronische Transistorschaltung, aufweist, welche ansprechend auf den Empfang eines Steuersignals von dem elektrisch leitenden Zustand in den elektrisch nicht leitenden Zustand überführbar ist.

6. Berechtigungstoken (100) nach Anspruch 4 oder 5, wobei der Schaltkreisabschnitt einen elektrisch leitenden Leitungsabschnitt aufweist, welcher mittels eines durch ein einfallendes elektromagnetisches Feld induzierten Stroms durchtrennbar und dadurch in den nicht leitenden Zustand überführbar ist, oder wobei der Schaltkreisabschnitt einen elektrisch leitenden Leitungsabschnitt aufweist, welcher bei Einwirkung einer mechanischen Kraft durchtrennbar und dadurch in den nicht leitenden Zustand überführbar ist.

7. Berechtigungstoken (100) nach einem der vorstehenden Ansprüche, wobei das Berechtigungstoken (100) eine mechanische Kontaktseite (103) aufweist, welche mit einer Klebeschicht (103a) versehen ist, wobei die mechanische Kontaktseite (103) mit dem elektronischen Identifikationsdokument (200) mittels der Klebeschicht (103a) stoffschlüssig verbindbar ist, um das Berechtigungstoken (100) mit dem elektronischen Identifikationsdokument (200) zu verbinden.

8. Berechtigungstoken (100) nach einem der vorstehenden Ansprüche, wobei das Display (105) ausgebildet ist, die Restlaufzeit oder das Ablaufdatum des Berechtigungstokens (100) im ersten Schaltkreiszustand anzuzeigen.

9. Berechtigungstoken (100) nach einem der vorstehenden Ansprüche, wobei es sich bei dem elektronischen Schaltkreis um einen elektronisch auslesbaren RFID-Chip (101) handelt.

10. Berechtigungstoken (100) nach Anspruch 9, wobei der RFID-Chip (101) ausgebildet ist, im Zusammenhang mit dem elektronischen Identifikationsdokument (200) ausgelesen zu werden.

11. Berechtigungstoken (100) nach Anspruch 9 oder 10, wobei der RFID-Chip (101) vom ersten Schaltkreiszustand in den zweiten Schaltkreiszustand überführbar ist, indem eine Resonanzfrequenz oder eine Güte des RFID-Chips (101) geändert wird.

12. Elektronisches Identifikationsdokument (200), insbesondere elektronischer Reisepass, mit einem Berechtigungstoken (100) nach einem der vorstehenden Ansprüche.

13. Elektronisches Berechtigungskontrollsystem (300) mit einem Berechtigungstoken (100) nach einem der Ansprüche 1 bis 11 und mit einem Lesegerät (301), das ausgebildet ist, zu überprüfen, ob sich ein elektronischer Schaltkreis (101) des Berechtigungstokens (100) in einem ersten Schaltkreiszustand oder in einem zweiten Schaltkreiszustand befindet.

## Claims

1. Authorization token (100) for an electronic identification document (200) of a person, wherein the authorization token (100) comprises an electronic circuit (101), which has a first circuit state and a second circuit state, wherein the electronic circuit (101) is configured to indicate in the first circuit state an entry, transit, exit and/or residence authorization of the person, and wherein the electronic circuit (101) is transferable from the first circuit state to the second circuit state in order to delete the entry, transit, exit and/or residence authorization, wherein the electronic circuit (101) is configured to automatically switch from the first circuit state to the second circuit state after a predefined duration, **characterized in that** the authorization token (100) further comprises a display (105), wherein the display (105) is configured to indicate how the electronic circuit (101) is manually transferable from the first circuit state to the second circuit state.

2. Authorization token (100) according to claim 1, wherein the electronic circuit (101) is irreversibly transferable from the first circuit state to the second circuit state.

3. Authorization token (100) according to claim 1 or 2, wherein the electronic circuit (101) is transferable from the first circuit state to the second circuit state in response to receiving an electromagnetic field.

4. Authorization token (100) according to any one of the preceding claims, wherein the electronic circuit (101) comprises a circuit portion, which is in an electrically conductive state in the first circuit state and which is in an electrically non-conductive state in the second circuit state.

5. Authorization token (100) according to claim 4, wherein the circuit portion comprises an electronic circuit, in particular an electronic transistor circuit, which is transferable from the electrically conductive state to the electrically non-conductive state in response to receiving a control signal.

6. Authorization token (100) according to claim 4 or 5, wherein the circuit portion comprises an electrically conductive wire portion, which is severable by a current induced by an incident electromagnetic field and is thereby transferable into the non-conductive state, or wherein the circuit portion comprises an electrically conductive wire portion, which is severable by an application of mechanical force and is thereby transferable into the non-conductive state.

7. Authorization token (100) according to any one of the preceding claims, wherein the authorization token (100) comprises a mechanical contact side (103), which is provided with an adhesive layer (103a), wherein the mechanical contact side (103) is connectable to the electronic identification document (200) by means of the adhesive layer (103a) in a material-locking manner in order to connect the authorization token (100) to the electronic identification document (200).

8. Authorization token (100) according to any one of the preceding claims, wherein the display (105) is configured to display the remaining duration or the expiry date of the authorization token (100) in the first circuit state.

9. Authorization token (100) according to any one of the preceding claims, wherein the electronic circuit is an electronically readable RFID chip (101).

10. Authorization token (100) according to claim 9, wherein the RFID chip (101) is configured to be read together with the electronic identification document (200).

11. Authorization token (100) according to claim 9 or 10, wherein the RFID chip (101) is transferable from the first circuit state to the second circuit state by changing a resonance frequency or a quality of the RFID chip (101).

12. Electronic identification document (200), in particular electronic passport, comprising an authorization token (100) according to any one of the preceding claims.

13. Electronic authorization control system (300) comprising an authorization token (100) according to any one of claims 1 to 11 and comprising a reading device (301), which is configured to verify whether an electronic circuit (101) of the authorization token (100) is in a first circuit state or in a second circuit state.

## Revendications

1. Jeton d'autorisation (100) pour un document d'identification électronique (200) d'une personne, dans lequel le jeton d'autorisation (100) comprend un circuit électronique (101), qui a un premier état de circuit et un deuxième état de circuit, dans lequel le circuit électronique (101) est configuré pour indiquer une autorisation d'entrée, de transit, de sortie et/ou de séjour de la personne dans le premier état de circuit, et dans lequel le circuit électronique (101) est transférable du premier état de circuit au deuxième état de circuit afin de supprimer l'autorisation d'entrée, de transit, de sortie et/ou de séjour, dans lequel le circuit électronique (101) est configuré pour passer automatiquement du premier état de circuit au deuxième état de circuit après une durée prédéfinie, **caractérisé en ce que** le jeton d'autorisation (100) en outre comprend un affichage (105), l'affichage (105) étant configuré pour indiquer comment le circuit électronique (101) est transférable manuellement du premier état de circuit au deuxième état de circuit.

2. Jeton d'autorisation (100) selon la revendication 1, dans lequel le circuit électronique (101) est transférable de manière irréversible du premier état du circuit au deuxième état du circuit.

3. Jeton d'autorisation (100) selon la revendication 1 ou 2, dans lequel le circuit électronique (101) est transférable du premier état de circuit au deuxième état de circuit en réponse à la réception d'un champ électromagnétique.

4. Jeton d'autorisation (100) selon l'une des revendications précédentes, dans lequel le circuit électronique (101) comprend une section de circuit, qui est dans un état électriquement conducteur dans le premier état de circuit et qui est dans un état électriquement non conducteur dans le deuxième état du circuit.

5. Jeton d'autorisation (100) selon la revendication 4, dans lequel la section de circuit comprend un circuit électronique, en particulier un circuit électronique à transistors, transférable de l'état électriquement conducteur à l'état électriquement non conducteur en réponse à la réception d'un signal de commande.

6. Jeton d'autorisation (100) selon la revendication 4 ou 5, dans lequel la section de circuit comprend une section de ligne électriquement conductrice, qui est séparable par un courant induit par un champ électromagnétique incident et est ainsi transférable dans l'état non conducteur, ou dans lequel la section de circuit comprend une section de ligne électriquement conductrice, qui peut être séparée par une application de force mécanique et est ainsi transférable dans l'état non conducteur.

7. Jeton d'autorisation (100) selon l'une des revendications précédentes, dans lequel le jeton d'autorisation (100) comprend une face de contact mécanique (103), qui est munie d'une couche adhésive (103a), dans laquelle la face de contact mécanique (103) peut être connecté au document d'identification électronique (200) au moyen de la couche adhésive (103a) de manière à verrouillage matériel afin de connecter le jeton d'autorisation (100) au document d'identification électronique (200).

8. Jeton d'autorisation (100) selon l'une des revendications précédentes, dans lequel l'afficheur (105) est configuré pour afficher la durée restante ou la date d'expiration du jeton d'autorisation (100) dans le premier état du circuit.

9. Jeton d'autorisation (100) selon l'une des revendications précédentes, dans lequel le circuit électronique est une puce RFID (101) lisible électroniquement.

10. Jeton d'autorisation (100) selon la revendication 9, dans lequel la puce RFID (101) est configurée pour être lue en relation avec le document d'identification électronique (200).

11. Jeton d'autorisation (100) selon la revendication 9 ou 10, dans lequel la puce RFID (101) est transférable du premier état de circuit au deuxième état de circuit en changeant une fréquence de résonance ou une qualité de la puce RFID (101).

12. Document d'identification électronique (200), notamment passeport électronique, comprenant un jeton d'autorisation (100) selon l'une des revendications précédentes.

13. Système électronique de contrôle d'autorisation (300) comprenant un jeton d'autorisation (100) selon l'une des revendications 1 à 11 et comprenant un dispositif de lecture (301), qui est configuré pour vérifier si un circuit électronique (101) du jeton d'autorisation (100) est dans un premier état de circuit ou dans un deuxième état de circuit.
